# EUROPEAN PATENT SPECIFICATION

(11) **EP 3 009 634 B1**
(45) Date of publication and mention of the grant of the patent: **27.02.2019**
(21) Application number: 14848311.8
(22) Date of filing: 30.06.2014
(51) Int. Cl.: F02B 39/16, F02B 39/00, F04D 29/42

(54) **COMPRESSOR AND TURBOCHARGER**
VERDICHTER UND TURBOLADER
COMPRESSEUR ET TURBOCOMPRESSEUR

(30) Priority: 25.09.2013 JP 2013198637
(43) Date of publication of application: 20.04.2016
(73) Proprietor: Mitsubishi Heavy Industries, Ltd., Tokyo 108-8215 (JP)
(72) Inventor: NAKAMURA, Toshio, Tokyo 108-8215 (JP); ARAKAWA, Hiroyuki, Tokyo 108-8215 (JP)
(74) Representative: Hoffmann Eitle
(86) International application number: PCT/JP2014/067414
(87) International publication number: WO 2015/045540

(56) References cited:
- EP-A1- 0 834 646
- DE-A1- 2 706 110
- JP-A- H10 110 622
- JP-U- S5 833 704
- US-A- 3 994 431
- US-A1- 2009 095 796
- US-A1- 2010 098 538
- US-A1- 2011 041 494
- US-A1- 2012 263 584

## Description

### TECHNICAL FIELD

The present invention relates to a compressor and a turbocharger used for an internal combustion engine.

### BACKGROUND ART

A conventionally-used turbocharger for compressing air to be supplied to an internal combustion engine is equipped with a compressor including an impeller for compressing air and an air-guide cylinder for housing the impeller and guiding the air.

The turbocharger described in JP2001-132465A includes a shock-absorbing partition wall disposed between a diffuser of a compressor and a head tank storing lubricant oil for lubricating a journal bearing so as to prevent the head tank from breaking apart to bring about oil leakage when a part of the impeller bursts and scatters outwardly.
EP 0 834 646 A1 relates to a device for a turbine housing with gas intake and discharge sections, a turbine wheel and guide blade channel between housing sections. An anti-burst device is positioned between the housing sections with exception of the guide channel and a second anti-burst device is formed on the gas intake housing.
US 2012/0263584 A1 relates to a compressor housing for radial compressor wherein at least two housing portions at least partially of plastic material defining a compressor impeller installation space and a spiral duct that surrounds it radially on the outside with regard to the rotational axis of an impeller.
US 2010/0098538 A1 relates to a casing of a fluid flow machine. The casing includes two half-casings which abut against each other on an axial parting plane. The casing also includes a fasten device for fastening the two half-casings to each other and for pretensioning the two half-casings.

### SUMMARY

### Problems to be Solved

In recent years, compressors and turbochargers are required to have a capability of maintaining a state in which an impeller is housed inside the turbocharger, which is a housing property of an impeller, so that an impeller fragment does not scatter outside the compressor or the turbocharger even when the impeller breaks apart.

In this regard, although JP2001-132465A describes a configuration for preventing breakage of a lubricant-oil head tank inside a turbocharger when a part of an impeller flies apart as described above, it does not disclose a configuration for maintaining a state in which the impeller is housed inside the compressor or the turbocharger so that an impeller fragment does not fly off outside the compressor or the turbocharger.

An object of the present invention is to provide a compressor and a turbocharger whereby it is possible to suppress scatter of an impeller fragment outside a compressor or a turbocharger upon breakage of an impeller effectively, and to maintain a state in which the impeller is housed inside the turbocharger and the compressor more securely.

### Solution to the Problems

The problem is solved by a compressor according to claim 1.

If the impeller breaks apart in the compressor, an impeller fragment may fly off outwardly in the radial direction of the impeller, and may break out the air-guide cylinder. With this regard, in the compressor according to the above, the impeller fragment hits the at least one wire rope wound around the air-guide cylinder even if the impeller fragment flies off and breaks out the air-guide cylinder. The wire rope is formed by twisting a plurality of wires, and thus is capable of absorbing the kinetic energy of the impeller fragment effectively to receive the impeller fragment by deformation of the wire rope itself upon hit of the impeller fragment. As a result, it is possible to suppress scatter of the impeller fragment outside the compressor upon breakage of the impeller effectively, and to maintain a state in which the impeller is housed inside the compressor more securely (it is possible to improve the housing property of the impeller).

Further, the configuration of the compressor according to the above can be achieved by winding at least one rope around the air-guide cylinder housing the impeller of an existing compressor. In other words, it is possible to manufacture the above compressor by adding at least one wire rope to an existing compressor without renewing the entire configuration, which is another merit from the perspective of manufacturability.

The compressor according to the invention comprises a scroll-chamber frame which forms a scroll chamber for guiding the air having passed through the air-guide cylinder to outside. At least a part of the at least one wire rope is disposed between the air-guide cylinder and the scroll-chamber frame.

A conventional compressor has a dead space between the air-guide cylinder and the scroll-chamber frame, but the dead space has not been fully utilized. In contrast, according to the compressor described in the above, with at least a part of the at least one wire rope disposed in the dead space, it is possible to suppress scatter of the impeller fragment outside the compressor effectively, without increasing the thickness of the air-guide cylinder of the compressor.

The at least part of the at least one wire rope is disposed within an existing region of blades of the impeller in an axial direction of the impeller.

With the compressor according to the above, since the wire rope is at a position where the impeller fragment is likely to scatter upon breakage of the impeller, it is possible to receive the impeller fragment with the wire rope effectively.

According to the invention, in at least a part of the existing region of the blades of the impeller in the axial direction of the impeller, a height to which the at least one wire rope is piled in a radial direction of the impeller increases toward an upstream side in a flow direction of the air inside the air-guide cylinder.

The height of the blades of the impeller increases toward the upstream side in the flow direction of air inside the air-guide cylinder. In view of this, the height to which the wire rope is piled in the radial direction of the impeller (a distance from the surface of the air-guide cylinder to the outer end of the wire rope in the radial direction of the impeller, or the number of winds of the wire rope in the radial direction of the impeller) is adjusted on the basis of damage prediction on the air-guide cylinder corresponding to the height of the blades of the impeller, which makes it possible to suppress scatter of the impeller fragment to outside of the compressor efficiently.

In some embodiments, the compressor according to any one of the above further comprises at least one swaging member for swaging an end portion and an opposite end portion of the at least one wire rope.

With the compressor according to the above, it is possible to install the wire rope around the air-guide cylinder with a simplified configuration. Thus, it is possible to maintain the impeller to be housed in the compressor more securely with a simplified configuration even if the impeller breaks apart.

In some embodiments, in the compressor according to any one of the above, the at least one wire rope comprises a plurality of wire ropes.

If there is a single wire rope wound around the air-guide cylinder and this wire rope is cut off, the tension of the wire rope decreases, and the kinetic energy of the impeller fragment that can be absorbed by the wire rope also decreases.

In contrast, with the compressor described in the above, even if one of the wire ropes is cut due to hit of the impeller fragment, the tension of the wire ropes other than the cut wire rope is maintained. That is, even if one of the wire ropes is cut off, the other wire ropes can absorb the kinetic energy of the impeller fragment effectively. As a result, it is possible to suppress scatter of the impeller fragment outside the compressor upon breakage of the impeller effectively, and to maintain the impeller to be housed inside the compressor more securely.

A turbocharger according to some embodiments of the present invention comprises a compressor as described above.

With the turbocharger according to some embodiments of the present invention, scatter of the impeller fragment outside the compressor is effectively suppressed upon breakage of the impeller, which makes it possible to maintain the impeller to be housed inside the turbocharger more securely (it is possible to improve the housing property of the impeller).

### Advantageous Effects

According to some embodiments of the present invention, it is possible to suppress scatter of the impeller fragment to outside of the compressor or the turbocharger effectively upon breakage of the impeller, and to maintain a state in which the impeller is housed inside the turbocharger or the compressor more securely.

### BRIEF DESCRIPTION OF DRAWINGS

FIG. 1 is a schematic diagram illustrating an overall configuration of an internal combustion engine system according to some embodiments.
FIG. 2 is a schematic cross-sectional view illustrating a part of a turbocharger according to some embodiments.
FIG. 3 is a diagram illustrating a structure of a wire rope according to some embodiments.
FIG. 4 is a diagram illustrating a structure of a swaging member according to some embodiments.
FIG. 5 is a schematic cross-sectional view illustrating a part of a turbocharger according to some embodiments.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention, which is defined by the appended claims, unless particularly specified.

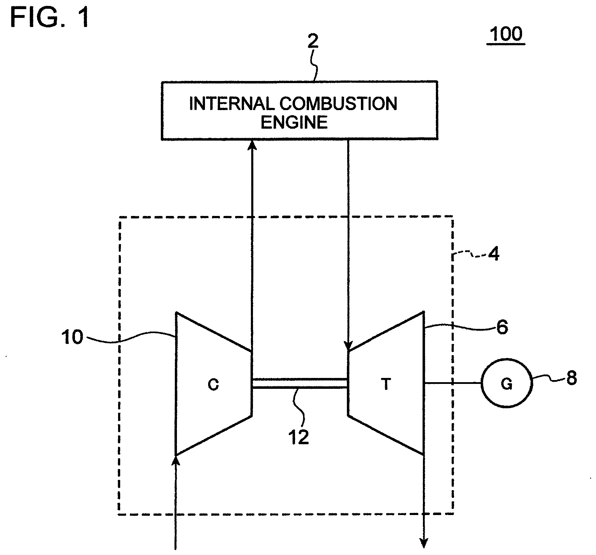

FIG. 1 is a schematic diagram illustrating an overall configuration of an internal combustion engine system 100 according to some embodiments. The internal combustion engine system 100 illustrated in FIG. 1 includes an internal combustion engine 2, a turbocharger 4 for pressurizing intake air sucked into the internal combustion engine 2, and a generator 8 driven by a turbine 6 of the turbocharger 4.

The turbocharger 4 illustrated in FIG. 1 includes a compressor 10 of centrifugal type for pressurizing intake air sucked into the internal combustion engine 2, and a turbine 6 coupled to the compressor 10 via a rotation shaft 12 and driven by exhaust gas of the internal combustion engine 2.

The turbocharger 4 illustrated in FIG. 1 is a supercharger of exhaust-turbine drive type, which is called a turbocharger, configured such that the compressor 10 is driven by the turbine 6 driven by exhaust gas of the internal combustion engine 2. In another embodiment, the turbocharger 4 may be a supercharger of mechanical drive type, which is called a supercharger, configured such that the compressor 10 is driven by power extracted from an output shaft of the internal combustion engine 2 via a belt or the like. Further, as the internal combustion engine 2, for instance, a diesel engine or a gasoline engine may be suitably selected.

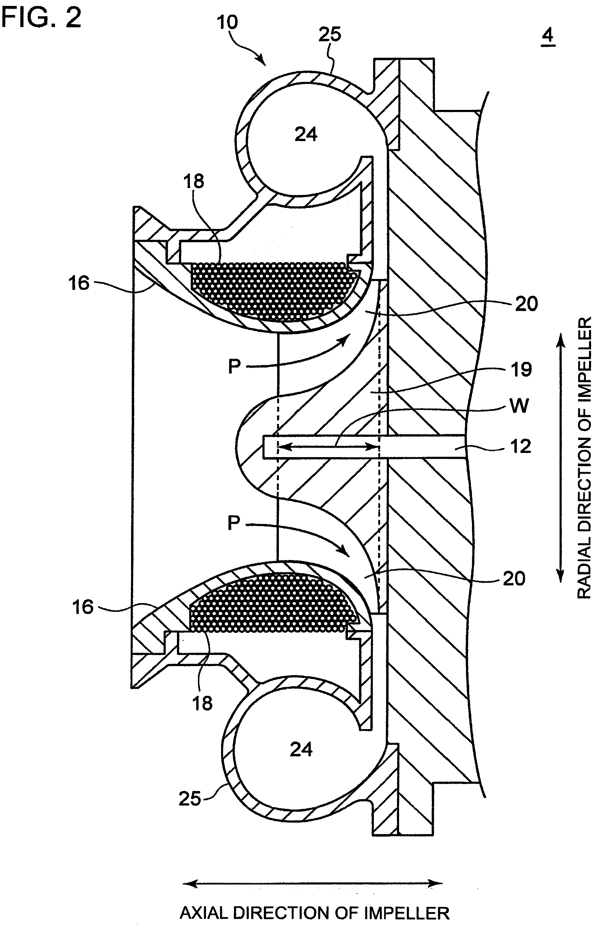

Next, the specific configuration of the turbocharger 4 will be described below with reference to FIG. 2.

FIG 2 is a schematic cross-sectional view illustrating a part of the turbocharger 4 according to some embodiments. The compressor 10 illustrated in FIG. 2 includes an impeller 14 for compressing air, an air-guide cylinder 16 for housing the impeller 14 and guiding air, and a wire rope 18 wound around the air-guide cylinder 16. The impeller 14 includes a hub 19 and a plurality of blades 20 disposed around the hub.

If the impeller 14 breaks apart in the compressor 10 constituting a part of the turbocharger 4, an impeller fragment (e.g. a part of one of the blades 20 of the impeller 14) may fly apart outwardly in the radial direction of the impeller 14, and may break out the air-guide cylinder 16.

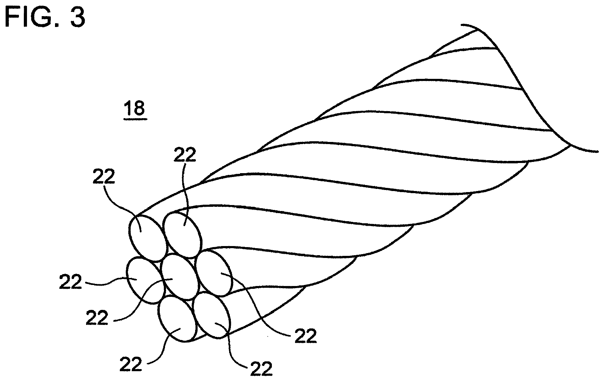

In this regard, since the wire rope 18 is wound around the air-guide cylinder 16 of the compressor 10 constituting a part of the turbocharger 4 illustrated in FIG. 2, the impeller fragment hits the wire rope 18 wound around the air-guide cylinder 16 even if the impeller fragment flies apart and breaks out the air-guide cylinder 16. The wire rope 18 is formed by twisting a plurality of wires 22 (see FIG. 3), and thus is capable of effectively absorbing the kinetic energy of the impeller fragment to receive the impeller fragment by deformation of the wire rope 18 itself upon hit of the impeller fragment. As a result, it is possible to suppress scatter of the impeller fragment outside the turbocharger 4 and the compressor 10 upon breakage of the impeller 14 effectively, and to maintain the impeller 14 to be housed inside the turbocharger 4 and the compressor 10 more securely (it is possible to improve the housing property of the impeller 14).

The material of the wire rope 18 may be selected optionally in accordance with required strength, and may be stainless steel, for instance. The thickness of the wire rope 18 may be selected optionally in accordance with required strength, and may have a diameter of approximately 1 to 24mm, for instance. However, the material and thickness of the wire rope 18 are not limited thereto.

As illustrated in FIG. 2, the compressor 10 constituting a part of the turbocharger 4 further includes a scroll-chamber frame 25 forming a scroll chamber 24 for guiding air that has passed through the air-guide cylinder 16 to outside, and at least a part of the wire rope 18 is disposed between the air-guide cylinder 16 and the scroll-chamber frame 25.

A conventional turbocharger 4 has a dead space between the air-guide cylinder 16 and the scroll-chamber frame 25, but the dead space has not been fully utilized. In contrast, with at least a part of the wire rope 18 disposed in the dead space, it is possible to suppress scatter of the impeller fragment outside the turbocharger 4 or the compressor 10 effectively, without increasing the thickness of the air-guide cylinder 16 of the turbocharger 4.

As further illustrated in FIG. 2, at least a part of the wire rope 18 is within the existing region W of the blades 20 of the impeller 14 in the axial direction (axial direction of the rotation shaft 12) of the impeller 14.

In this way, since the wire rope 18 is at a position where the impeller fragment is likely to scatter upon breakage of the impeller 14, it is possible to receive the impeller fragment with the wire rope 18 effectively.

According to the invention, as illustrated in FIG. 2, in at least a partial range of the existing region W of the blades 20 of the impeller 14 in the axial direction of the impeller 14, the height to which the wire rope 18 is piled up in the radial direction of the impeller 14 (a distance from the surface of the air-guide cylinder 16 to an outer end of the wire rope 18 in the radial direction of the impeller 14) increases toward the upstream side in the flow direction of air inside the air-guide cylinder 16.

The height of the blades 20 of the impeller 14 increases toward the upstream side in the flow direction of air inside the air-guide cylinder 16. Thus, in the existing region W of the blades 20 of the impeller 14 in the axial direction of the impeller 14, there is a high possibility that the impeller fragment that is produced upon breakage of the impeller 14 increases in size toward the upstream side in the flow direction P of air inside the air-guide cylinder 16.

Thus, it is possible to maintain the impeller 14 to be housed in the turbocharger 4 or the compressor 10 more securely without using more of the wire rope 18 than necessary, by setting the height to which the wire rope 18 is piled up in the radial direction of the impeller 14 to a height that corresponds to the risk as described above.

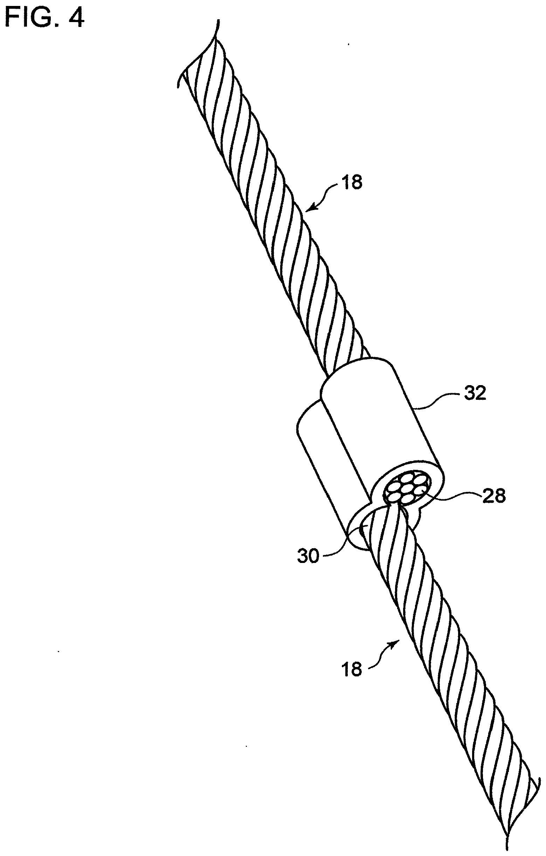

In some embodiments, as illustrated in FIG. 4, the turbocharger 4 includes a swaging member 32 that swages an end portion 28 and the opposite end portion 30 of the wire rope 18. In this way, it is possible to install the wire rope 18 around the air-guide cylinder 16 with a simplified configuration. Thus, it is possible to maintain the impeller 14 to be housed in the turbocharger 4 and the compressor 10 more securely with a simplified configuration even if the impeller 14 breaks apart.

Meanwhile, if the wire rope 18 wound around the air-guide cylinder 16 is cut off in the turbocharger 4 illustrated in FIG. 2, the tension of the wire rope 18 decreases, and the kinetic energy of the impeller fragment that can be absorbed by the wire rope 18 decreases.

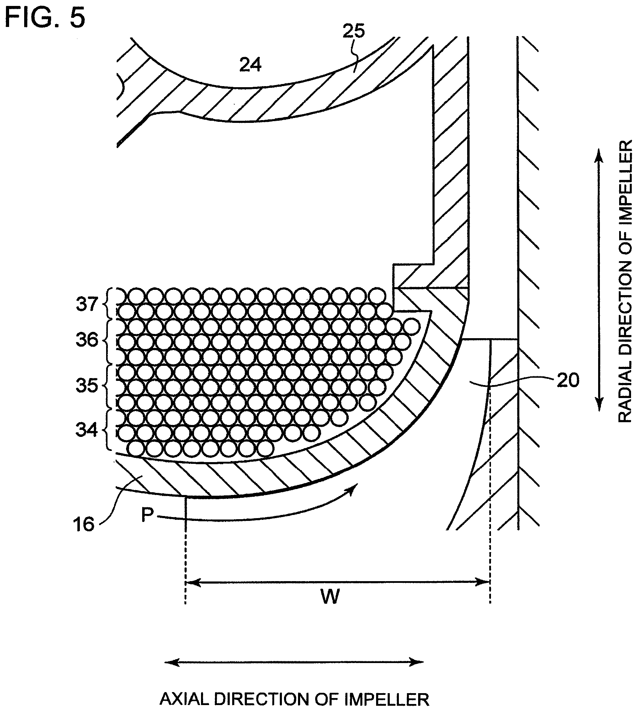

In contrast, in the embodiment illustrated in FIG. 5, the turbocharger 4 includes a plurality of wire ropes 34 to 37 wound around the air-guide cylinder 16. FIG 5 is a magnified view of the air-guide cylinder 16 and its peripheral structure in the compressor 10 constituting a part of the turbocharger 4. The material and diameter of the plurality of wire ropes 34 to 37 may be the same as those of the wire rope 18 described with reference to FIG 2.

In the turbocharger 4 and the compressor 10 illustrated in FIG. 5, even if the wire rope 34 is cut off due to hit of the impeller fragment, the tension of the wire ropes 35 to 37 is basically not affected. Thus, even if the wire rope 34 is cut off, the wire ropes 35 to 37 piled on the wire rope 34 in series can absorb the kinetic energy of the impeller fragment effectively. As a result, it is possible to suppress scatter of the impeller fragment outside the turbocharger 4 or the compressor 10 effectively upon breakage of the impeller 14, and to maintain the impeller 14 to be housed inside the turbocharger 4 and the compressor 10 more securely.

In the embodiment illustrated in FIG. 5, at least a part of the plurality of wire ropes 34 to 37 is disposed between the air-guide cylinder 16 and the scroll-chamber frame 25.

With at least a part of the plurality of wire ropes 34 to 37 disposed in the dead space between the air-guide cylinder 16 and the scroll-chamber frame 25, it is possible to suppress scatter of the impeller fragment outside the turbocharger 4 and the compressor 10 effectively, without increasing the thickness of the air-guide cylinder 16 of the compressor 10 constituting a part of the turbocharger 4.

In the turbocharger 4 illustrated in FIG. 5, at least a part of the plurality of wire ropes 34 to 37 is disposed within the existing region W of the blades 20 of the impeller 14 in the axial direction of the impeller 14.

In this way, since the wire ropes 34 to 37 are at a position where the impeller fragment is likely to scatter upon breakage of the impeller 14, it is possible to receive the impeller fragment with the wire ropes 34 to 37 effectively.

In the compressor 10 constituting a part of the turbocharger 4 illustrated in FIG. 5, in at least a part of the existing region W of the blades 20 of the impeller 14 in the axial direction of the impeller 14, the height to which the plurality of wire ropes 34 to 37 is piled up in the radial direction of the impeller 14 increases toward the upstream side in the flow direction P of air inside the air-guide cylinder 16.

The height of the blades 20 of the impeller 14 increases toward the upstream side in the flow direction P of air inside the air-guide cylinder 16. Thus, in the existing region W of the blades 20 of the impeller 14 in the axial direction of the impeller 14, there is a high possibility that the impeller fragment produced upon breakage of the impeller 14 increases in size toward the upstream side in the flow direction of air inside the air-guide cylinder 16.

Thus, it is possible to maintain the impeller 14 to be housed in the turbocharger 4 and the compressor 10 more securely without using more of the plurality of wire ropes 34 to 37 than necessary, by setting the height to which the wire ropes 34 to 37 are piled in the radial direction of the impeller 14 to a height that corresponds to the risk as described above.

The plurality of wire ropes 34 to 37 is swaged by a swaging member (similar to the swaging member 32 illustrated in FIG 4) for swaging an end portion and the opposite end portion of each of the wire ropes 34 to 37. Providing such a swaging member makes it possible to install the wire ropes 34 to 37 around the air-guide cylinder 16 with a simplified configuration. Thus, it is possible to maintain the impeller 14 to be housed in the turbocharger 4 more securely with a simplified configuration even if the impeller 14 breaks apart.

### Description of Reference Numeral

- 2: Internal combustion engine
- 4: Turbocharger
- 6: Turbine
- 8: Generator
- 10: Compressor
- 12: Rotation shaft
- 14: Impeller
- 16: Air-guide cylinder
- 18, 34 to 37: Wire rope
- 19: Hub
- 20: Blade
- 22: Wire
- 24: Scroll chamber
- 25: Scroll-chamber frame
- 28: End portion
- 30: Opposite end portion
- 32: Swaging member
- 100: Internal combustion engine system
- P: Flow direction of air inside air-guide cylinder
- W: Existing region of blades of impeller in the axial direction of impeller

## Claims

1. A compressor (10) comprising:
an impeller (14) for compressing air;
an air-guide cylinder (16) for housing the impeller (14) and guiding the air; and
at least one wire rope (18) wound around the air-guide cylinder (16),
a scroll-chamber frame (25) which forms a scroll chamber (24) for guiding the air having passed through the air-guide cylinder (16) to outside,
wherein at least a part of the at least one wire rope (18) is disposed between the air-guide cylinder (16) and the scroll-chamber frame (25),
wherein the at least part of the at least one wire rope (18) is disposed within an existing region of blades (20) of the impeller (14) in an axial direction of the impeller (14), and
wherein, in at least a part of the existing region of the blades (20) of the impeller (14) in the axial direction of the impeller (14), a height to which the at least one wire rope (18) is piled in a radial direction of the impeller (14) increases toward an upstream side in a flow direction of the air inside the air-guide cylinder (16).

2. The compressor (10) according to claim 1, further comprising at least one swaging member (32) for swaging an end portion (28) and an opposite end portion (30) of the at least one wire rope (18).

3. The compressor (10) according to claim 1 or 2, wherein the at least one wire rope (18) comprises a plurality of wire ropes (18).

4. A turbocharger (4) comprising the compressor according to any one of claims 1 to 3.

## Patentansprüche

1. Verdichter (10), umfassend:
einen Impeller (14) zum Verdichten von Luft;
einen Luftleitzylinder (16) zum Aufnehmen des Impellers (14) und zum Leiten der Luft; und
zumindest ein Drahtseil (18), das um den Luftleitzylinder (16) gewickelt ist,
einen Schneckenkammerrahmen (25), der eine Schneckenkammer (24) zum Leiten der durch den Luftleitzylinder (16) verlaufenen Luft nach außen bildet,
wobei zumindest ein Teil des zumindest einen Drahtseils (18) zwischen dem Luftleitzylinder (16) und dem Schneckenkammerrahmen (25) angeordnet ist,
wobei der zumindest eine Teil des zumindest einen Drahtseils (18) innerhalb eines bestehenden Bereichs von Blättern (20) des Impellers (14) in einer axialen Richtung des Impellers (14) angeordnet ist und
wobei in zumindest einem Teil des bestehenden Bereichs der Blätter (20) des Impellers (14) in der axialen Richtung des Impellers (14) eine Höhe, auf die das zumindest eine Drahtseil (18) in einer radialen Richtung des Impellers (14) aufgeschichtet ist, in Richtung einer stromaufwärts gelegenen Seite in einer Strömungsrichtung der Luft im Inneren des Luftleitzylinders (16) zunimmt.

2. Verdichter (10) nach Anspruch 1, weiter umfassend zumindest ein Gesenkschmiedeelement (32) zum Gesenkschmieden eines Endteils (28) und eines entgegengesetzten Endteils (30) des zumindest einen Drahtseils (18).

3. Verdichter (10) nach Anspruch 1 oder 2, wobei das zumindest eine Drahtseil (18) eine Vielzahl von Drahtseilen (18) umfasst.

4. Turbolader (4), umfassend den Verdichter nach einem der Ansprüche 1 bis 3.

## Revendications

1. Compresseur (10) comprenant:
une roue à aubes (14) pour comprimer l'air ;
un cylindre de guidage d'air (16) pour loger la roue à aubes (14) et guider l'air ; et
au moins un câble d'acier (18) enroulé autour du cylindre de guidage d'air (16),
un châssis de chambre à spirale (25) qui forme une chambre à spirale (24) pour guider l'air qui est passé à travers le cylindre de guidage d'air (16) vers l'extérieur,
dans lequel au moins une partie de l'au moins un câble d'acier (18) est disposée entre le cylindre de guidage d'air (16) et le châssis de chambre à spirale (25),
dans lequel l'au moins une partie de l'au moins un câble d'acier (18) est disposée à l'intérieur d'une région existante d'aubes (20) de la roue à aubes (14) dans une direction axiale de la roue à aubes (14), et
dans lequel, dans au moins une partie de la région existante des aubes (20) de la roue à aubes (14) dans la direction axiale de la roue à aubes (14), une hauteur à laquelle l'au moins un câble d'acier (18) est empilé dans une direction radiale de la roue à aubes (14) augmente vers un côté amont dans une direction de flux de l'air à l'intérieur du cylindre de guidage d'air (16).

2. Compresseur (10) selon la revendication 1, comprenant en outre au moins un élément de rétreinte (32) pour la rétreinte d'une portion d'extrémité (28) et d'une portion d'extrémité opposée (30) de l'au moins un câble d'acier (18).

3. Compresseur (10) selon la revendication 1 ou 2, dans lequel l'au moins un câble d'acier (18) comprend une pluralité de câbles d'acier (18).

4. Turbocompresseur (4) comprenant le compresseur selon l'une quelconque des revendications 1 à 3.
